# EUROPÄISCHE PATENTSCHRIFT

(11) **EP 1 122 844 B1**
(45) Veröffentlichungstag und Bekanntmachung des Hinweises auf die Patenterteilung: **25.07.2007**
(21) Anmeldenummer: 00125838.3
(22) Anmeldetag: 25.11.2000
(51) Int. Cl.: H02G 3/04

(54) **Kabelkanal**
Cable channel
Canalisation pour câble

(30) Priorität: 07.02.2000 CH 2332000
(43) Veröffentlichungstag der Anmeldung: 08.08.2001
(73) Patentinhaber: Reichle & De-Massari AG, 8620 Wetzikon (CH)
(72) Erfinder: Honegger, Kurt, 8636 Wald (CH)
(74) Vertreter: Petschner, Goetz

(56) Entgegenhaltungen:
- WO-A-96/35887
- GB-A- 2 175 754
- US-A- 5 900 586

## Beschreibung

Die vorliegende Erfindung betrifft einen Kabelkanal aus Kunststoff für Strom - und Telekommunikationskabel zur Verkabelung und Vernetzung von Büroräumen u. dgl. mit in Kanalerstreckung miteinander über Rastermittel verbindbare Kanalabschnitte mit im wesentlichen geschlossener, mindestens einen Kabel-Führungskanal umschliessender Wandung, wobei der Kabel-Führungskanal für das Einlegen von Strom- und Telekommunikationskabel u. dgl. durch eine Schlitzung der frontseitigen Wandung in Kanalerstreckung zugänglich ist.

Solche Kabelkanäle sind durch die WO 96/35887 A oder auch durch die GB-A-2 175 754 bekannt, welche gestatten, im Rahmen zunehmender Verkabelung und Vernetzung von Büroräumen, Geschäftsräumen, Operationssälen, Intensivstationen u. dgl. die Strom - und Telekommunikationskabel bis zu jeder gewünschten Stelle geordnet und geführt zu verlegen.

Problematisch ist hiebei allerdings die geforderte Vielfalt in der Anwendung solcher Kabelkanäle, beispielsweise als starre gerade Führungen oder zur variablen Führung der Strom - und Telekommunikationskabel in unterschiedlichen Radien; die Anbringung der Kabelkanäle am Boden oder an Wandungen; sowie eine beliebige Ein- und Ausführung der Strom - und Telekommunikationskabel am Kabelkanal. Entsprechend vielfältig sind auch die bekannten Kabelkanäle, die beispielsweise in Form zusammensteckbare Gliederketten zur Bildung unterschiedlichster Kanal-Radien Verwendung finden. Nachteilig ist hierbei insbesondere die Verwendung von Stiften, Nieten oder Schrauben , um die einzelnen Kanalabschnitte miteinander zu verbinden, was umständliche und zusätzliche Montagearbeiten erfordert.

Aufgabe der vorliegenden Erfindung ist deshalb die Schaffung eines Kabelkanals für Verkabelungssysteme und Raumvernetzungen sowie für die Verlegung von Druckleitungen von Steuersystemen u. dgl., deren Kanalabschnitte ohne Verwendung zusätzlicher Bauteile zusammenfügbar sind, wobei die einstückige und einzige Ausführungsform der Kanalabschnitte zu einem unaufwendig erstellbaren Kabelkanal führen, der allen gestellten Anforderungen der Verlegung von Strom - und Telekommunikationskabeln oder auch Steuerleitungen zu genügen vermag.

Dies wird erfindungsgemäss dadurch erreicht, dass die Rastermittel eine, in eine Gegenschlitzung am einen Kanalabschnitt einschiebbare Schwenkachse am anderen Kanalabschnitt umfasst, und dass die Gegenschlitzung der Rastermittel in einer Gabel vorgesehen ist, die zur wahlweisen Aufnahme der zugeordneten Schwenkachse mindestens zwei Rasterstufen aufweist, wobei in der innersten Rasterstellung die Kanalabschnitte starr miteinander verbunden sind.

Hierbei können für ein seitliches Ein- und Ausführen der Kabel, Druckleitungen u. dgl. vorgegebene geschwächte frontseitige Wandungsteile ausbrechbare Durchführungen bilden.

Zweckmässig ist ferner, wenn sich die Rastermittel in Kanalerstreckung zentrisch im Kanalabschitt erstrecken.

Ein weiterer Vorteil wird zudem dadurch erreicht, dass ein seitlicher Teil der frontseitigen Wandung der Kabelabschnitte mit der bodenseitigen Wandung einen spitzen Winkel einschliesst mit einer von Büro-Rollwagen u. dgl. leicht überfahrbaren Neigung. Zudem kann die bodenseitige Wandung der Kanalabschnitte randseitige Schlitze zur Aufnahme von vorzugsweise Z-förmigen Boden-oder Wand-Befestigungsbügeln aufweisen.

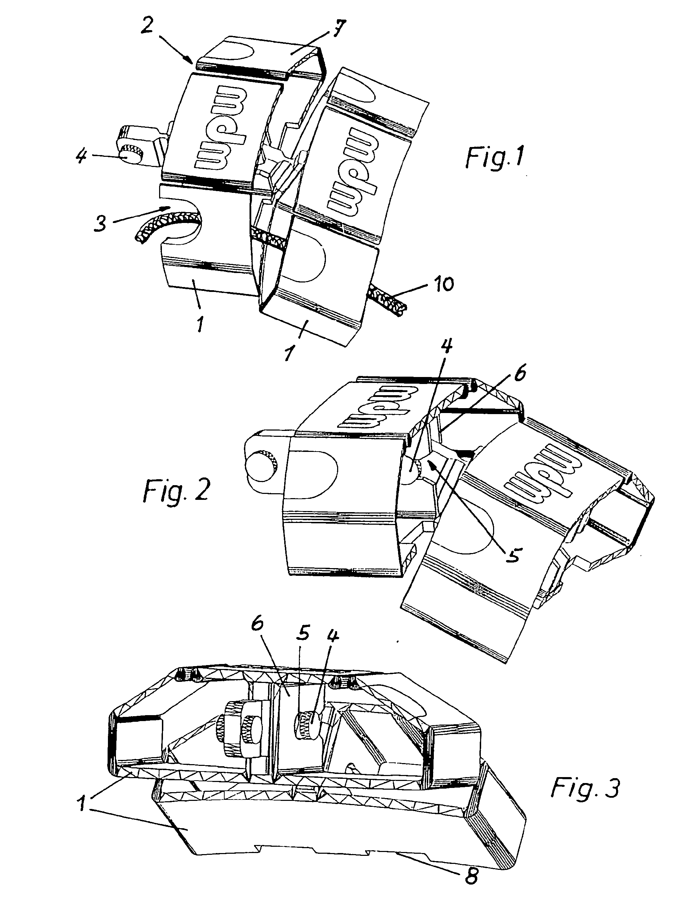

Eine beispielsweise Ausführungsform des Erfindungsgegenstandes ist nachfolgen anhand der Zeichnung näher erläutert: Es zeigen
Fig. 1 bis 3 den erfindungsgemässen Kabelkanal in verschiedenen schaubildartigen Darstellungen.

Der erfindungsgemässe Kabelkanal aus Kunststoff für Strom - und Telekommunikationskabel zur Verkabelung und Vernetzung von Büroräumen u. dgl. sowie für die Verlegung von Druckleitungen von Steuersystemen u. dgl. umfasst in Kanalerstreckung über Rastermittel 4,5,6 miteinander verbindbare Kanalabschnitte 1 mit im wesentlichen geschlossener, mindestens einen Kabel-Führungskanal umschliessender Wandung, wobei der Kabel-Führungskanal für das Einlegen von Strom - und Telekommunikationskabel durch eine Schlitzung 2 der frontseitigen Wandung in Kanalerstreckung und für das seitliche Ein- und Ausführen von Strom - und Telekommunikationskabel durch mittels vorgegebener geschwächter frontseitiger Wandungsteile ausbrechbare Durchführungen 3 zugänglich ist.

Die Rastermittel 4,5,6 umfassen eine, in eine Gegenschlitzung 5 des einen Kanalabschnittes einschiebbare Schwenkachse 4 des anderen Kanalabschnittes. Hierbei erstrecken sich die Rastermittel 4,5,6 in Kanalerstreckung zentrisch im Kanalabschitt 1. Ferner ist die Gegenschlitzung 5 der Rastermittel 4,5,6 in einer Gabel 6 vorgesehen, die zur wahlweisen Aufnahme der zugeordneten Schwenkachse 4 mindestens zwei Rasterstufen aufweist, wobei in der innersten Rasterstellung die Kanalabschnitte 1 starr miteinander verbunden sind.

Ferner ist den Fig. 1 bis 3 entnehmbar, dass ein seitlicher Teil 7 der frontseitigen Wandung der Kanalabschnitte 1 mit der bodenseitigen Wandung einen spitzen Winkel einschliesst mit einer von Büro-Rollwagen u. dgl. leicht überfahrbaren und stolperfrei begehbaren Neigung.

Für eine einfache Befestigung solcher Kabelkanäle weist ferner die bodenseitige Wandung der Kanalabschnitte 1 randseitige Schlitze 8 zur Aufnahme von vorzugsweise Z-förmigen Boden- oder Wand-Befestigungsbügeln (nicht gezeigt) auf.

Durch diese vorbeschriebenen Massnahmen ergibt sich ein Kabelkanal für Verkabelungssysteme und Raumvernetzungen sowie für die Verlegung von Druckleitungen von Steuersystemen u. dgl., welcher in einer einzigen Ausführungsform allen gestellten Anforderungen der Verlegung, der Ordnung, der Führung und des Schutzes von Strom - und Telekommunikationskabeln oder auch Steuerleitungen zu genügen vermag.

Es wird Schutz beansprucht wie folgt:

## Patentansprüche

1. Kabelkanal aus Kunststoff für Strom - und Telekommunikationskabel zur Verkabelung und Vernetzung von Büroräumen u. dgl., mit in Kanalerstreckung miteinander über Rastermittel verbindbare Kanalabschnitte mit im wesentlichen geschlossener, mindestens einen Kabel-Führungskanal umschliessender Wandung, wobei der Kabel-Führungskanal für das Einlegen von Strom - und Telekommunikationskabel u. dgl. durch eine Schlitzung der frontseitigen Wandung in Kanalerstreckung zugänglich ist,
**dadurch gekennzeichnet,**
**dass** die Rastermittel (4,5,6) eine, in eine Gegenschlitzung (5) am einen Kanalabschnitt einschiebbare Schwenkachse (4) am anderen Kanalabschnitt umfasst, und dass die Gegenschlitzung (5) der Rastermittel (4,5,6) in einer Gabel (6) vorgesehen ist, die zur wahlweisen Aufnahme der zugeordneten Schwenkachse (4) mindestens zwei Rasterstufen aufweist, wobei in der innersten Rasterstellung die Kanalabschnitte (1) starr miteinander verbunden sind.

2. Kabelkanal nach Anspruch 1, **dadurch gekennzeichnet, dass** für ein seitliches Ein- und Ausführen der Kabel, Druckleitungen u. dgl. vorgegebene geschwächte frontseitige Wandungsteile ausbrechbare Durchführungen (3) bilden.

3. Kabelkanal nach Anspruch 1, **dadurch gekennzeichnet, dass** sich die Rastermittel (4,5,6) in Kanalerstreckung zentrisch im Kanalabschitt (1) erstrecken.

4. Kabelkanal nach Anspruch 1, **dadurch gekennzeichnet, dass** ein seitlicher Teil (7) der frontseitigen Wandung der Kanalabschnitte (1) mit der bodenseitigen Wandung einen spitzen Winkel einschliesst mit einer von Büro-Rollwagen u. dgl. leicht überfahrbaren Neigung.

5. Kabelkanal nach Anspruch 1, **dadurch gekennzeichnet, dass** die bodenseitige Wandung der Kanalabschnitte (1) randseitige Schlitze (8) zur Aufnahme von vorzugsweise Z-förmigen Boden- oder Wand-Befestigungsbügeln aufweist.

## Claims

1. A cable channel of plastic for electrical supply and telecommunications cables for the wiring and linking of office premises and suchlike, with channel sections which are able to be connected with each other via grid connection arrangements in the extent of the channel, having a substantially closed wall embracing at least one cable feed channel, the cable feed channel for laying electrical supply and telecommunications cables and suchlike being accessible via a slot in the front wall in the extent of the channel,
**characterized in that**
the grid connection arrangements (4,5,6) comprise a pivot axle (4) which is able to be inserted into a counter slot (5) on the one channel section, on the other channel section, and that the counter slot (5) of the grid connection arrangements (4,5,6) is provided in a fork (6) which has at least two grid stages to optionally receive the associated pivot axle (4), in which in the innermost grid position, the channel sections (1) are connected rigidly with each other.

2. The cable channel according to Claim 1, **characterized in that** for a lateral introduction and removal of the cables, pressure lines and suchlike, predetermined weakened wall parts on the front side form passages (3) which can be broken.

3. The cable channel according to Claim 1, **characterized in that** the grid connection arrangements (4,5,6) extend in the channel extent centrally in the channel section (1).

4. The cable channel according to Claim 1, **characterized in that** a lateral part (7) of the wall of the channel sections (1) on the front side forms an acute angle with the wall on the floor side, with an inclination which is easily able to be travelled over by office trolleys and suchlike.

5. The cable channel according to Claim 1, **characterized in that** the wall of the channel sections (1) on the floor side has marginal slots (8) to receive preferably Z-shaped floor- or wall-fastening brackets.

## Revendications

1. Canalisation pour câbles en matière plastique pour les câbles d'électricité et de télécommunication pour le câblage et la mise en réseau de locaux de bureaux et similaires avec des sections de canalisation pouvant être reliées entre elles à l'aide de moyens de verrouillage dans la direction longitudinale de la canalisation, comportant une paroi essentiellement fermée, entourant au moins un canal de guidage de câbles, le canal de guidage de câbles étant accessible à travers une fente de la paroi frontale en direction longitudinale pour la pose de câbles d'électricité et de télécommunication et similaires,
**caractérisée en ce que**,
les moyens de verrouillage (4, 5, 6) comprennent un axe pivotant (4) d'une section de canalisation pouvant être inséré dans une fente antagoniste (5) d'une autre section de canalisation et **en ce que** la fente antagoniste (5) des moyens de verrouillage (4, 5, 6) est prévue dans une fourche (6) qui présente aux moins deux étages de verrouillage pour le logement au choix de l'axe pivotant (4) correspondant, les sections de canalisation (1) étant rigidement assemblées entre elles dans la position de verrouillage la plus intérieure.

2. Canalisation pour câbles suivant la revendication 1, **caractérisée en ce que** des parties de paroi frontale affaiblies prédéfinies forment des traversées (3) à découper pour l'entrée et la sortie latérales des câbles, conduites de pression et similaires.

3. Canalisation pour câbles suivant la revendication 1, **caractérisée en ce que** les moyens de verrouillage (4, 5, 6) s'étendent de manière centrée dans la direction longitudinale de la section de canalisation (1).

4. Canalisation pour câbles suivant la revendication 1, **caractérisée en ce qu'**une partie latérale (7) de la paroi frontale des sections de canalisation (1) forme avec la paroi de sol un angle aigu d'une pente facilement franchissable par un chariot à roulettes de bureau ou similaire.

5. Canalisation pour câbles suivant la revendication 1, **caractérisée en ce que** la paroi de sol des sections de canalisation (1) présente des fentes latérales (8) pour le logement d'étriers de fixation au sol ou au mur ayant de préférence une forme en Z.
